# EUROPEAN PATENT APPLICATION

(11) **EP 1 712 175 A1**
(43) Date of publication of application: **18.10.2006**
(21) Application number: 05356220.3
(22) Date of filing: 26.12.2005
(51) Int. Cl.: A47L 9/32

(54) **Vacuum cleaner**

(30) Priority: 11.04.2005 KR 2005029935
(71) Applicant: Samsung Gwangju Electronics Co., Ltd., Gwangju-city (KR)
(72) Inventor: Ki-man, Kim, Gwangsan-gu, Gwandju-city (KR)
(74) Representative: Schouller, Jean-Philippe

(57) **Abstract**

A vacuum cleaner (10) comprises a cleaner body (11) having a suction force source and a dirt separator (110) for separating dirt particles from air drawn in by the suction force, a dirt receptacle (120) located under the dirt separator and removably mounted in the cleaner body, and a handle unit (300) which a user holds to carry the vacuum cleaner. The handle unit prevents disconnection of the dirt separator and the dirt receptacle while in a carrying position.

## Description

### BACKGROUND OF THE INVENTION

### Field of the Invention

The present invention relates generally to the field of vacuum cleaners, and in certain exemplary embodiments, to a vacuum cleaner having a dust-collecting apparatus removably disposed therein.

### Description of the Related Art

In general, a dust-collecting apparatus separates dirt particles from drawn-in air and collects the dirt particles. For this, the dust-collecting apparatus comprises a dirt separator for separating dirt particles and a dirt receptacle connected with the dirt separator for collecting the separated dirt particles.

The dust-collecting apparatus is removably disposed in a vacuum cleaner to allow a user to empty the dirt receptacle easily. Examples of such a dust-collecting apparatus are disclosed in Japanese Patent Publication No. 2003-180569 and Korean Paten Publication No. 10-2003-0038415. In order to empty the dirt receptacle, a user first draws out the dust-collecting apparatus from the vacuum cleaner, then disconnects the dirt receptacle from the dirt separator.

However, the two steps for emptying the dirt receptacle, i.e., drawing out the dust-collecting apparatus from the vacuum cleaner and then disconnecting the dirt receptacle from the dirt separator, may cause inconvenience to a user. Also, a user applies force to disconnect the dirt receptacle from the dirt separator, and dirt particles may drop down from the dirt receptacle due to excessive force. This may contaminate the user's hands.

Meanwhile, the vacuum cleaner, which comprises the dust-collecting apparatus as described above, generally further comprises a handle for a user to carry the vacuum cleaner with ease. The handle is rotatably disposed on a cleaner body, and a user holds the handle in an upright position to carry the vacuum cleaner.

However, if the dirt receptacle and the dirt separator are not firmly connected to each other, they are easily released from the connection due to swinging movement and shock when the user carries the vacuum cleaner. In that case, the dirt particles tend to drop down from the dirt receptacle and contaminate the surrounding environment.

### SUMMARY OF THE INVENTION

It is to be understood that both the following summary and the detailed description are exemplary and explanatory and are intended to provide further explanation of the invention as claimed. Neither the summary nor the description that follows is intended to define or limit the scope of the invention to the particular features mentioned in the summary or in the description.

In certain embodiments, the disclosed embodiments may solve one or more of the above problems and/or disadvantages and may provide one or more of the advantages described herein.

Accordingly, in some exemplary embodiments, a vacuum cleaner is provided from which a user is able to remove only the dirt receptacle if desired.

In further exemplary embodiments, a vacuum cleaner is capable of maintaining a firm connection between a dirt separator and a dirt receptacle while being carried.

In an exemplary embodiment, the above aspects are achieved by providing a vacuum cleaner comprising a cleaner body having a suction force source and a dirt separator for separating dirt particles from air drawn in by the suction force, a dirt receptacle located under the dirt separator and removably mounted in the cleaner body, and a handle unit which a user holds to carry the vacuum cleaner, for preventing the dirt separator and the dirt receptacle from being disconnected from each other.

In exemplary embodiments, the handle unit may comprise a handle disposed on the cleaner body, a lever disposed on the dirt separator and contacting one side of the handle, a lever connector disposed on the cleaner body, the lever being locked into and unlocked from the lever, and a second elastic member pressing the lever in a direction such that the lever is unlocked from the lever connector. In such embodiments, as a user holds handle in an upright position, the lever is locked into the lever connector, thereby preventing the dirt separator and the dirt receptacle from being disconnected from each other.

In other exemplary embodiments, a vacuum cleaner comprises a cleaner body, a dirt separator rotatably disposed in the cleaner body, a dirt receptacle removably mounted in the cleaner body, and a handle unit which a user holds to carry the vacuum cleaner, for preventing the dirt separator and the dirt receptacle from being disconnected from each other.

In some embodiments the vacuum further comprises a locking unit for locking or unlocking the dirt separator and the dirt receptacle.

In exemplary embodiments, the vacuum may further comprise a cover rotatably disposed on the cleaner body, and the dirt separator is connected with the cover.

The locking unit may comprise a button disposed on a handle of the dirt receptacle and having a hook formed thereon, a securing part disposed on the dirt separator, the hook of the button being hooked in or released from the securing part, and a first elastic member pressing the button in a locking direction.

The securing part may comprise a support protrusion protruding from the dirt separator, and a hook connection portion formed at a lower portion of the support protrusion.

The handle unit may comprise a handle disposed on the cleaner body, a lever disposed on the dirt separator and contacting one side of the handle, a lever connector disposed on the cleaner body, the lever being locked into or unlocked from the lever connector, and a second elastic member pressing the lever in a direction such that the lever is unlocked from the lever connector. As user holds the handle in an upright position, the lever is locked into the lever connector, thereby preventing the dirt separator and the dirt receptacle from being disconnected from each other.

The handle may comprise a holding part which a user holds, and a contact portion formed at a lower portion of the holding part. The contact portion may be guided along a guide recess formed in the dirt separator to press the lever.

### BRIEF DESCRIPTION OF THE DRAWINGS

The accompanying drawings, which are incorporated herein and form a part of the specification, illustrate exemplary embodiments and, together with the description, further serve to enable a person skilled in the pertinent art to make and use these embodiments and others that will be apparent to those skilled in the art.

FIG. 1 is a perspective view showing a vacuum cleaner according to an embodiment of the present invention;

FIG. 2 is an enlarged view showing a locking unit of FIG. 1;

FIG. 3 is a view showing the locking unit of FIG. 2 when a button is pressed;

FIG. 4 is a view showing a dirt separator after being unlocked from a dirt receptacle with a handle lying down;

FIG. 5 is an enlarged view showing a handle unit of FIG. 1;

FIG. 6 is a view showing a handle of FIG 5 in a standing-up state; and

FIG. 7 is a enlarged view of FIG. 6.

### DETAILED DESCRIPTION OF EXEMPLARY EMBODIMENTS

A vacuum cleaner and improved features thereof will now be disclosed in terms of several exemplary embodiments. This specification discloses one or more embodiments that incorporate the features of this invention. The embodiment(s) described, and references in the specification to "one embodiment", "an embodiment", "an example embodiment", etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, persons skilled in the art may effect such feature, structure, or characteristic in connection with other embodiments whether or not explicitly described.

In the following description, similar drawing reference numerals may be used for the same elements even in different drawings. The embodiments described, and their detailed construction and elements, are merely provided to assist in a comprehensive understanding of the invention. Thus, it is apparent that the present invention can be carried out in a variety of ways, and does not require any of the specific features described herein. Also, well-known functions or constructions are not described in detail since they would obscure the invention with unnecessary detail.

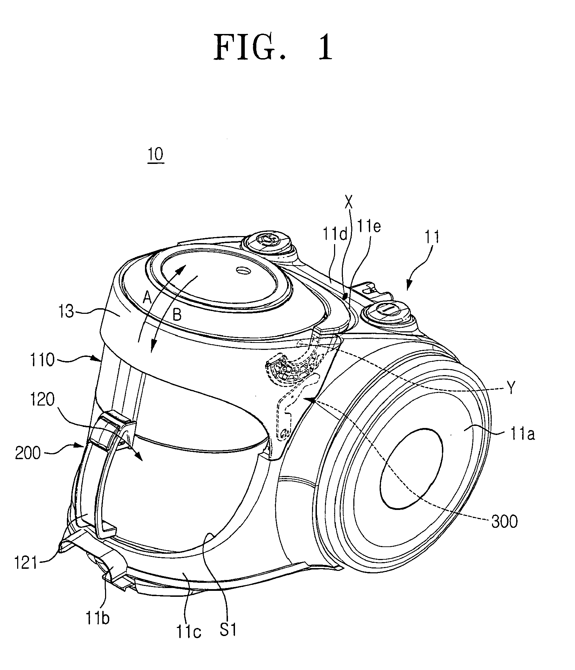

Referring to FIG. 1, a vacuum cleaner 10 according to one exemplary embodiment of the present invention comprises a cleaner body 11, a cover 13, a dirt separator 110, a dirt receptacle 120, a locking unit 200, and a handle unit 300.

A wheel 11 a is disposed at each side of the cleaner body 11, and a suction pipe 11b connected to an extension pipe (not shown) is formed at a side of the cleaner body 11. The air-borne dirt particles are drawn in through the suction pipe 11b by a suction force transmitted from a suction source (not shown) provided in the cleaner body 11 and guided to the dirt separator 110.

The cleaner body 11 is provided with a dirt-collecting chamber S1 in which the dirt receptacle 120 is mounted. When the dirt receptacle 120 is mounted in the dirt-collecting chamber S1, a lower portion of the dirt receptacle 120 is nested in sidewall 11c of the dirt-collecting chamber S1 and thus the movement of the dirt receptacle 120 is restricted. The cleaner body 11 has an insert recess 11e defined on a top 11d thereof such that a handle 310 is inserted into the insert recess 11e.

The cover 13 is pivotably disposed at the cleaner body 11. For this, the cover 13 is hinged to a hinge axis X of the cleaner body 11 and pivots on the hinge axis X at a predetermined angle in an arrowed direction A or B.

The dirt separator 110 separates dirt particles from air that has been drawn in by the suction force (not shown) through the suction pipe 11b. The dirt separator 110 may use a single cyclone unit that has only one cyclone or multi-cyclone unit that has a plurality of cyclones, and alternatively, may use a plurality of filters to separate the dirt particles. Since the inner parts of the dirt separator 110 do not constitute a primary feature of the present invention, their detailed descriptions will be omitted.

Meanwhile, the dirt separator 110 is removably mounted in the cover 13. Alternatively, the dirt separator 110 is rotatably attached to the cleaner body 11 without the cover 13. However, for convenience in maintenance and repair, it is preferred that the dirt separator 110 is removably mounted in the cover 13. The dirt separator 110 is rotated about the hinge axis X together with the cover 13 in the direction of arrows A or B when the dirt separator 110 is unlocked from the dirt receptacle 120. Since the bottom of the dirt-collecting chamber S1 is inclined toward the rear side of the cleaner body 11, the cover 13 and the dirt separator 110 are more easily pivoted in the arrowed direction A or B.

The dirt receptacle 120 is connected with a lower side of the dirt separator 110, for collecting the dirt particles that have been centrifugally separated from the drawn-in air at the dirt separator 110. The dirt receptacle 120 is provided with a handle 121 that a user may hold to empty the dirt receptacle 120.

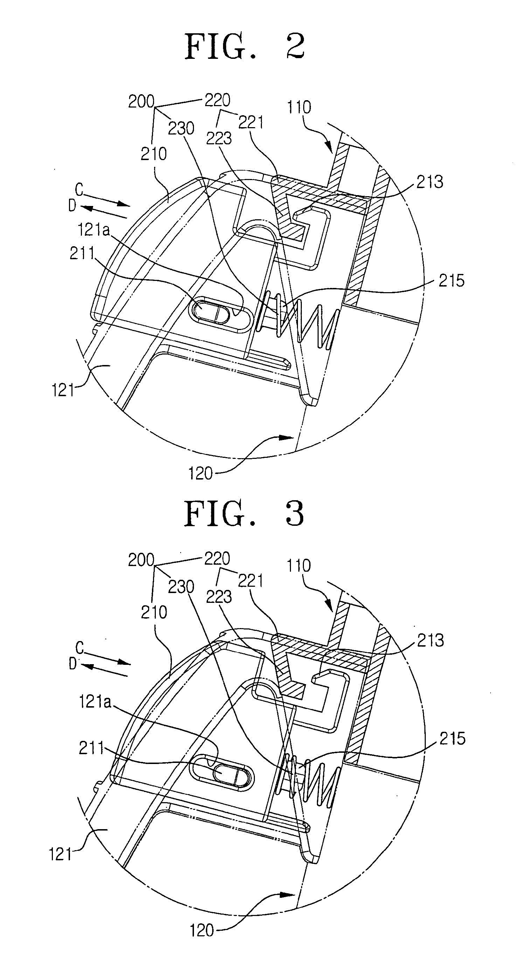

Referring to FIG. 2, the locking unit 200 is to lock or unlock the dirt receptacle 120 to or from the dirt separator 110. The locking unit 200 comprises a button 210, a securing part 220 and a first elastic member 230.

The button 210 is disposed on the handle 121 of the dirt receptacle 120 and moves in the direction of arrows C or D. A guide protrusion 211 is formed on each side of the button 210, and recesses 121a are formed on each side of handle 121. The guide protrusions 211 are inserted into the guide recesses 121 a. A hook 213 is formed at an end of the button 210 to be hooked into or released from the securing part 220.

The securing part 220 is formed at the dirt separator 110 to correspond to the hook 213. The securing part 220 comprises a support protrusion 221 and a hook connecting portion 223 formed at a lower portion of the support protrusion 221 to be directly hooked by or released from the hook 213. The securing part 220 may be integrally formed with the dirt separator 110 or individually fabricated and welded or adhered to the dirt separator 110.

The first elastic member 230 is disposed between the button 210 and the dirt receptacle 120 and is extended in the direction of arrow D, i.e., a locking direction, to press against button 210. An elastic member insertion protrusion 215 is formed on the button 210, and one end of the first elastic member 230 fits over the elastic member insertion protrusion 215. In this embodiment, the first elastic member 230 is a coil spring. However, any desired configuration of the member may be selected if it is made of any elastic material, for example, rubber. If the button 210 is not pressed in the direction of arrow C and supported on the first elastic member 230, the button 210 stands in a locking position in which the hook 213 is hooked into the hook connection portion 223 of the securing part 220 as shown in FIG. 2.

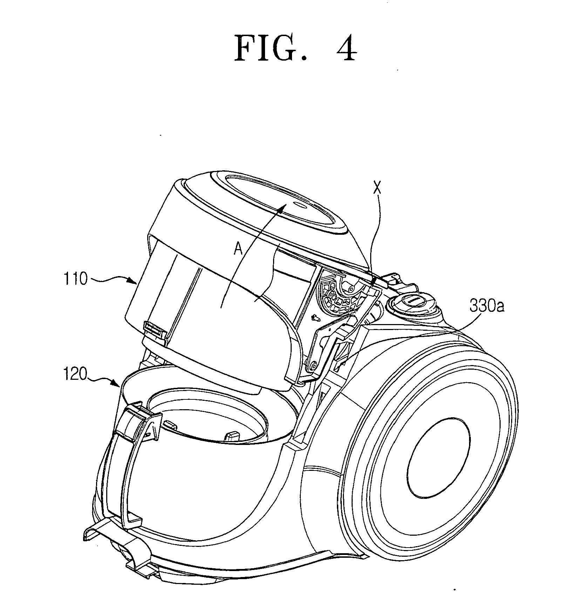

Hereinafter, the operation of the locking unit 200 having the above construction will be described with reference to FIG. 3. A user presses the button 210 in the arrowed direction C to release dirt receptacle 120 (see FIG. 1) from the cleaner body 11 (see FIG. 1). At this time, the hook 213 is released from the hook connecting portion 223 of the securing part 220 so that the dirt separator 110 and the dirt receptacle 120 are unlocked from each other. Referring to FIG. 4, the user pivots the dirt separator 110 on the hinge axis X in the arrowed direction A, withdraw the dirt receptacle 120 from the cleaner body 11 and then empties the dirt receptacle 120.

Due to the presence of the locking unit 200, only the dirt receptacle 120 is removed from the cleaner body 11. Accordingly, the operation of emptying the dirt receptacle 120 becomes simplified. Also, a user is not required to apply a force to unlock the dirt separator 110 and the dirt receptacle 120 from each other, and thus the dirt particles are less likely to drop down from the dirt receptacle 120, and are thereby prevented from contaminating the user's hands.

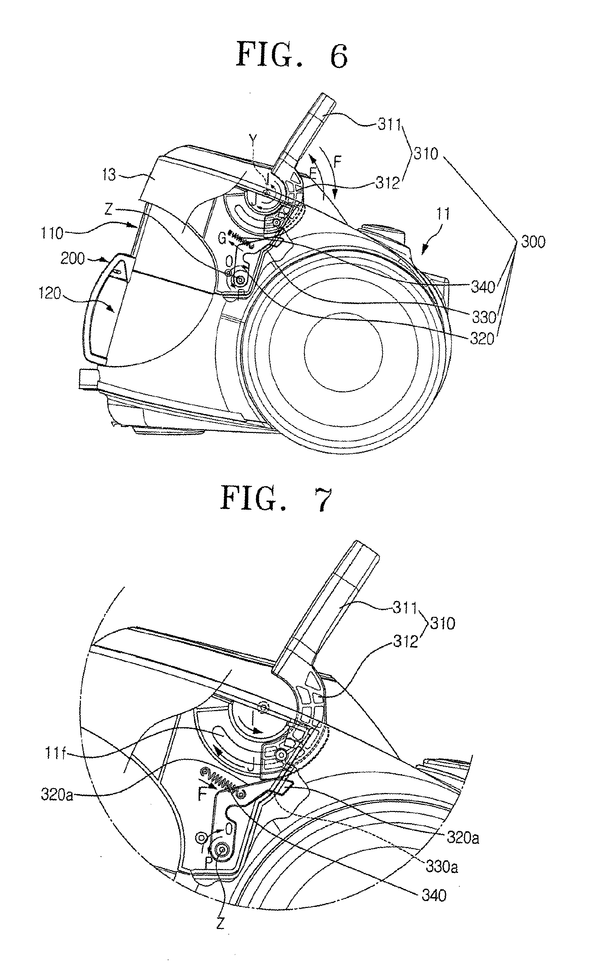

When the dirt separator 110 and the dirt receptacle 120 are unlocked from each other by the manipulation of the locking unit 200, they are prevented from being disconnected from each other by the handle 310 of the handle unit 300 held in an upright position as shown in FIG. 6. In this exemplary embodiment, the handle unit 300 comprises the handle 310, a lever 320, a lever engagement part 330, and a second elastic member 340.

Referring to FIG. 6, a user holds the handle 310 to carry the vacuum cleaner 10. The handle 310 is formed on the cleaner body 11 and pivots about a handle axis Y of the cleaner body 11 in a direction indicated by arrows E or F. The handle 310 comprises a holding part 311 and a contact part 312.

The user holds the holding part 311 in an upright position to carry the vacuum cleaner 10.

The contact part 312 is formed at a lower portion of the holding part 311 and has a semicircular shape. The contact part 312 directly contacts an upper side 320a (see FIG. 7) of the lever 320. The contact part 312 is guided along a guide recess 11f (see FIG. 7) of the cleaner body 11 in the direction of arrows I or J.

A pair of levers 320 are rotatably disposed at opposite sides of the dirt separator 110. In this embodiment, lever 320 turns on a lever axis Z in an arrowed direction O or P. The lever axis Z penetrates through the cover 13 connected with the dirt separator 110.

A lever connector 330 is disposed on the cleaner body 11 and has a lever connection hole 330a (see FIG. 4) in which a lever end 320b (see FIG. 7) may be locked into, or unlocked from. The lever connector 330 may be integrally formed with the cleaner body 11 or individually fabricated and welded or otherwise adhered to the cleaner body 11.

The second elastic member 340 has one end connected to the lever 320 and the other end connected to the cover 13. The second elastic member 340 may be a coil spring. The second elastic member 340 always pulls the lever 320 in an arrowed direction G such that the lever end 320b (see FIG. 7) is locked into the lever connection hole 330a (see FIG. 7).

Hereinafter, an exemplary embodiment of the operation of the handle unit 300 having the above construction will be described in more detail.

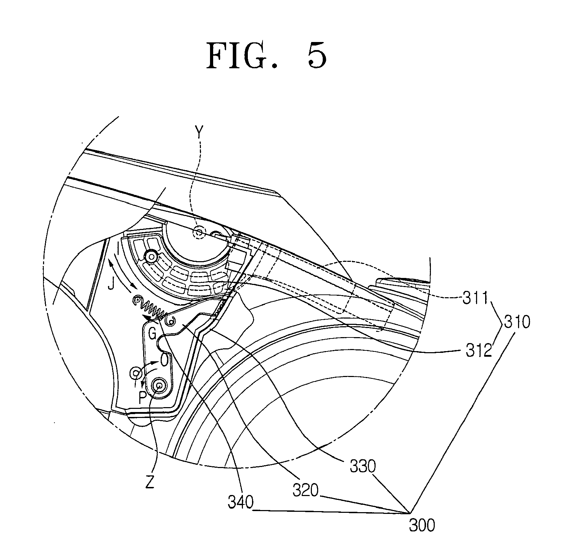

Referring to FIGS. 5 and 6, a user holds the holding part 311 to carry the vacuum cleaner 10 (see FIG. 1), and raises the handle 310 in the position as shown in FIG. 5 such that the handle 310 stands up as shown in FIG. 6.

Referring to FIGS. 6 and 7, the contact part 312 presses the upper portion 320a of the lever 320 in the arrowed direction I, and simultaneously, the lever 320 turns on the lever axis Z in the arrowed direction O so that the lever end 320b is locked into the lever connection hole 330a. Accordingly, even if the hook 213 (see FIG. 2) and the hook connection portion 223 (see FIG. 2) of the securing part 220 are unlocked from each other because they are not firmly secured to each other, the dirt separator 110 and the dirt receptacle can be prevented from being disconnected from each other by holding the handle 310 in an upright position to fit the lever 320 between the lever connection hole 330a and the contact portion 312.

In order to perform cleaning operations, the handle 310 in the position of FIG. 6 returns to the position shown in FIG. 5. At this time, the contact portion 312 slides on the upper portion 320a of the lever 320 in the direction of arrow J.

At this time, the lever 320 turns on the lever axis Z by the second elastic member 340 in the direction of arrow P so that the lever end 320b is unlocked from the lever connection recesses 330a. Accordingly, the lever 320 is released from the locking state with the lever connection hole 330a, and thus it is possible disconnect the dirt separator 110 and the dirt receptacle 120 by manipulating locking unit 200 (see FIG. 1).

Even if the hook 213 (see FIG. 2) and the hook connection portion 223 (see FIG. 2) are unlocked from each other while a user carries the cleaner 10, for example because they are not firmly secured to each other, the dirt separator 110 and the dirt receptacle 120 can be prevented from being disconnected from each other by the manipulation of the handle unit 300.

The vacuum cleaners disclosed in certain exemplary embodiments may have one or more of the following advantages, among others:

First, only the dirt receptacle 120 is drawn out from the cleaner body 11 by unlocking the dirt separator 110 and the dirt receptacle 120 from each other. Accordingly, a user can more easily empty dirt receptacle 120.

Second, since the user does not need to apply a force to unlock the dirt separator 110 and the dirt receptacle 120 from each other, dirt particles can be prevented from dropping down from the dirt receptacle 120 and thus can be prevented from contaminating the user's hands.

Third, even if the dirt separator 110 and the dirt receptacle 120 are not firmly secured to each other, they can be prevented from being disconnected from each other by the handle unit 300. Accordingly, when a user carries the vacuum cleaner 10, the dirt particles are prevented from dropping down from the dirt receptacle 120 and from contaminating the surrounding environment.

The foregoing embodiments and advantages are merely exemplary and are not to be construed as limiting the present invention. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function, as well as all alternative structures that perform the same or similar functions.

## Claims

1. A vacuum cleaner (10) comprising:
a cleaner body (11) having a suction force source and a dirt separator (110) for separating dirt particles from air drawn in by the suction force;
a dirt receptacle (120) located under the dirt separator (110) and removably mounted in the cleaner body (11) ; and
a handle unit (300) which a user holds to carry the vacuum cleaner, for preventing the dirt separator (110) and the dirt receptacle (120) from being disconnected from each other.

2. The vacuum cleaner (10) as claimed in claim 1, wherein the handle unit (300) comprises:
a handle (310) disposed on the cleaner body (11);
a lever (320) disposed on the dirt separator (110) and contacting one side of the handle;
a lever connector (330) disposed on the cleaner body, the lever being locked into and unlocked from the lever connector ; and
a second elastic member (340) pressing the lever in a direction such that the lever is unlocked from the lever connector, and
wherein, as a user holds the handle in an upright position, the lever (320) is locked into the lever connector (330), thereby preventing the dirt separator (110) and the dirt receptacle (120) from being disconnected from each other.

3. A vacuum cleaner (10) comprising:
a cleaner body (11) ;
a dirt separator (110) rotatably disposed in the cleaner body;
a dirt receptacle (120) removably mounted in the cleaner body (11), and
a handle unit (300) which a user holds to carry the vacuum cleaner, for preventing the dirt separator (110) and the dirt receptacle (120) from being disconnected from each other.

4. The vacuum cleaner as claimed in claim 3, further comprising a locking unit (200) for locking or unlocking the dirt separator (110) and the dirt receptacle (120).

5. The vacuum cleaner as claimed in claim 4, further comprising a cover (13) rotatably disposed on the cleaner body (11), the dirt separator (110) being connected with the cover (13).

6. The vacuum cleaner as claimed in claim 5, wherein the locking unit (200) comprises:
a button (210) disposed on a handle (121) of the dirt receptacle (120) and having a hook (213) formed thereon;
a securing part (220) disposed on the dirt separator (110), the hook (213) of the button being hooked in or released from the securing part; and
a first elastic member (230) pressing the button (210) in a locking direction.

7. The vacuum cleaner as claimed in claim 6, wherein the securing part (220) comprises:
a support protrusion (221) protruding from the dirt separator (110) ; and
a hook connecting portion (223) formed at a lower portion of the support protrusion (221).

8. The vacuum cleaner as claimed in claim 5, wherein the handle unit (300) comprises:
a handle (310) disposed on the cleaner body (11) ;
a lever (320) disposed on the dirt separator (110) and contacting one side of the handle;
a lever connector (330) disposed on the cleaner body, the lever being locked into or unlocked from the lever connector; and
a second elastic member (340) pressing the lever in a direction such that the lever is unlocked from the lever connector,
wherein, as a user holds the handle in an upright position, the lever (320) is locked into the lever connector (330), thereby preventing the dirt separator (110) and the dirt receptacle (120) from being disconnected from each other.

9. The vacuum cleaner as claimed in claim 8, wherein the handle (310) comprises:
a holding part (311) which a user holds; and
a contact portion (312) formed at a lower portion of the holding part (311).

10. The vacuum cleaner as claimed in claim 9, wherein the contact portion (312) is guided along a guide recess (11f) formed in the dirt separator (110) to press the lever (320).
